# EUROPÄISCHE PATENTSCHRIFT

(11) **EP 1 891 159 B1**
(45) Veröffentlichungstag und Bekanntmachung des Hinweises auf die Patenterteilung: **08.10.2008**
(21) Anmeldenummer: 06742809.4
(22) Anmeldetag: 04.05.2006
(51) Int. Cl.: C08L 83/04, C09D 183/04, C08G 77/20

(54) **ALLYLORGANOPOLYSILOXANE AUFWEISENDE VERNETZBARE ZUSAMMENSETZUNGEN**
CROSS-LINKABLE COMPOSITIONS CONTAINING ALLYLORGANOPOLYSILOXANES
COMPOSITIONS RETICULABLES CONTENANT DES ALLYLORGANOPOLYSILOXANES

(30) Priorität: 16.06.2005 DE 102005027927
(43) Veröffentlichungstag der Anmeldung: 27.02.2008
(73) Patentinhaber: Wacker Chemie AG, 81737 München (DE)
(72) Erfinder: LAUTENSCHLAGER, Hans, 84533 Haiming (DE); GEISBERGER, Gilbert, 84503 Altötting (DE)
(74) Vertreter: Fritz, Helmut
(86) Internationale Anmeldenummer: PCT/EP2006/004200
(87) Internationale Veröffentlichungsnummer: WO 2006/133769

(56) Entgegenhaltungen:
- EP-A- 0 851 000
- US-A- 4 609 574
- US-A- 5 525 696

## Beschreibung

Die Erfindung betrifft vernetzbare Zusammensetzungen enthaltend Alkenylgruppen aufweisende Organopolysiloxane, Organosiliciumverbindungen mit Si-gebundenen Wasserstoffatomen und Katalysatoren, Formkörper herstellbar durch Vernetzung der Zusammensetzungen und ein Verfahren zur Herstellung von Beschichtungen.

Als Alkenylgruppen aufweisende Organopolysiloxane in vernetzbaren Zusammensetzungen für die Herstellung von klebrige Stoffe abweisenden Überzügen, insbesondere für die Trennpapierbeschichtung, werden üblicherweise lineare Diorganopolysiloxane mit endständigen Alkenylgruppen verwendet, die entlang der Hauptkette seitenständige, direkt an D-Einheiten gebundene Alkenylgruppen aufweisen. Derartige vernetzbare Zusammensetzungen sind beispielspielsweise in US 4476166 A beschrieben.

In EP 361477 A wird darauf hingewiesen, dass, wenn eine Alkenylgruppe mit weniger als 4 Kohlenstoffatomen verwendet wird, und wenn das resultierende, copolymerisierte Alkenylgruppen enthaltende Organopolysiloxan in Gegenwart einer Platin-haltigen Substanz umgesetzt wird, die Reaktionsgeschwindigkeit unvermeidlicherweise niedrig ist.

In US 4,609,574 werden Diorganopolysiloxane mit seitenständigen höheren Alkenylgruppen, wie Hexenylgruppen, in einer Hydrosilylierungsreaktion durch Umsetzung von Diorganopolysiloxane mit seitenständigen SiH-Gruppen mit α,ω-Dienen, wie 1,5-Hexadien, erhalten. Jedoch führt dieses Verfahren zu einem unerwünschten Verbleiben von Hexadien im Polymer, welches einen unerwünschten Geruch erhält. Auch ist das 1,5-Hexadien relativ teuer. Ferner isomerisiert das 1,5-Hexadien leicht und führt dann zu Hexenylgruppen, deren Doppelbindung nicht endständig ist und dadurch nur langsam vernetzen. Insbesondere erhöhen aber die verhältnismässig grossen organischen Hexenylgruppen den organischen Charakter der Diorganopolysiloxane. Dies führt zu einer besseren Haftung der Selbstklebematerialen und zu einem schlechteren Trennkraftverhalten der Trennpapierbeschichtung insbesondere bei hohen Abzugsgeschwindigkeiten.

Es bestand die Aufgabe, Organopolysiloxane mit Alkenylgruppen enthaltende vernetzbare Zusammensetzungen bereitzustellen, die die vorstehenden Nachteile nicht aufweisen und insbesondere nach dem Vernetzen eine niedrige Trennkraft bei hohen Abzugsgeschwindigkeiten erforderlich machen, ohne dass dadurch die Vernetzungsgeschwindigkeit verlangsamt wird.

Gegenstand der Erfindung sind vernetzbare Zusammensetzungen enthaltend
(A) Alkenylgruppen aufweisende Organopolysiloxane der allgemeinen Formel (I) 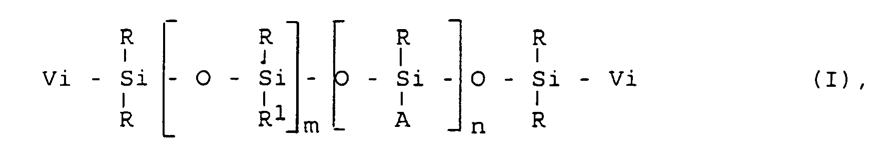 in der
   - R: einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
   - R¹: einen einwertigen SiC-gebundenen, gegebenenfalls substituierten Kohlenwasserstoffrest mit 1 bis 18 Kohlenstoffatomen,
   - A: einen Allylrest,
   - Vi: einen Vinylrest,
   - m: einen Wert von 40 bis 1000 und
   - n: einen Wert von 1 bis 10 bedeuten,
(B) Organosiliciumverbindungen mit Si-gebundenen Wasserstoffatomen und
(C) die Anlagerung von Si-gebundenem Wasserstoff an aliphatische Doppelbindungen fördernde Katalysatoren.

Die vernetzbaren Zusammensetzungen, welche seitenständige Allylgruppen aufweisende Organopolysiloxane (A) enthalten, haben den Vorteil, dass sie hohe Aushärtungsgeschwindigkeiten aufweisen, die mit den Aushärtungsgeschwindigkeiten der Zusammensetzungen, welche seitenständige Hexenylgruppen aufweisende Organopolysiloxane (A) enthalten, vergleichbar sind. Bei hohen Aushärtungsgeschwindigkeiten der Zusammensetzungen werden trotz kurzer Vernetzungszeiten geringe Werte an extrahierbaren Anteilen der vernetzten Zusammensetzungen erreicht.

Die Aushärtungsgeschwindigkeiten sind aber bei Zusammensetzungen, die Organopolysiloxane (A) enthalten, die zusätzlich zu seitenständigen Allylgruppen auch endständige Allylgruppen aufweisen, deutlich langsamer.

Im Vergleich zu den grösseren seitenständigen Alkenylgruppen, wie Hexenylgruppen bringen die Allylgruppen weniger Kohlenwasserstoffanteil in das Molekül. Dadurch wird der Siliconcharakter weniger abgeschwächt. Deshalb weisen die vernetzbaren Zusammensetzungen nach der Vernetzung eine geringere Haftung von Selbstklebematerialen auf, mit der Folge, dass eine niedrigere Trennkraft bei hohen Abzugsgeschwindigkeiten erforderlich ist. Typische Abzugsgeschwindigkeiten sind 200 bis 400 m/min, insbesondere 300m/min).

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Alkylrest mit 1 bis 6 Kohlenstoffatomen, wobei der Methylrest besonders bevorzugt ist.

Beispiele für Reste R¹ sind die bei dem Rest R aufgeführten Beispiele und Alkenylreste, auch mit terminaler aliphatischer Kohlenstoff-Kohlenstoff-Doppelbindung wie der Vinyl-, 5-Hexenyl-, Cyclohexenyl-, 1-Propenyl-, Allyl-, 3-Butenyl- und 4-Pentenylrest.

Vorzugsweise hat der Rest R¹ die Bedeutungen von R.

Vorzugsweise weist m einen Wert von 100 bis 200, besonders bevorzugt 120 bis 160 auf. Vorzugsweise weist n einen Wert von 1 bis 6, insbesondere 2 bis 5 auf.

Die Organopolysiloxane (A) besitzen vorzugsweise eine durchschnittliche Viskosität von 100 bis 10000 mPa.s bei 25°C, bevorzugt 200 bis 1000 mPa.s bei 25°C.

Die erfindungsgemäßen Organopolysiloxane (A) werden nach üblichen Verfahren hergestellt, beispielsweise durch Hydrolyse von Allylmethyldichlorsilan und anschließender Äquilibrierung des entstandenen Hydrolysats mit cyclischem Polydimethylsiloxan und einem vinylendständigen Dimethylsiloxan mit einem geeigneten Katalysator.

In den vernetzbaren Zusammensetzungen werden als Organosiliciumverbindungen (B), die Si-gebundene Wasserstoffatome aufweisen, vorzugsweise lineare, cyclische oder verzweigte Organopolysiloxane aus Einheiten der allgemeinen Formel (II)

R²ₐH_{b}SiO_{(4-a-b)/2} (II),

eingesetzt, wobei
- **R²**: einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
- **a**: die Werte 0, 1, 2 oder 3 und
- **b**: die Werte 0, 1 oder 2 bedeuten,
und die Summe von a+b 0, 1, 2 oder 3 ist,
mit der Maßgabe, dass pro Molekül durchschnittlich mindestens 2 Si-gebundene Wasserstoffatome vorliegen.

Beispiele und bevorzugte Beispiele für Kohlenwasserstoffreste R gelten in vollem Umfang für Kohlenwasserstoffreste R².

Vorzugsweise enthalten die Organosiliciumverbindungen (B) mindestens 3 Si-gebundene Wasserstoffatome.

Bevorzugt als Organosiliciumverbindungen (B) werden Organopolysiloxane der allgemeinen Formel (III)

H_{c}R²_{3-c}SiO(SiR²₂O)_{d}(SiR²HO)ₑSiR²_{3-c}H_{c} (III),

eingesetzt, wobei **R²** die oben dafür angegebene Bedeutung hat,
- c: die Werte 0, 1 oder 2,
- d: die Werte 0 oder eine ganze Zahl von 1 bis 1500 und
- e: den Wert 0 oder eine ganze Zahl von 1 bis 200 bedeuten,
mit der Maßgabe, dass pro Molekül durchschnittlich mindestens 2 Si-gebundene Wasserstoffatome vorliegen.

Im Rahmen dieser Erfindung soll die allgemeine Formel (III) so verstanden werden, dass d Einheiten - (SiR²₂O)- und e Einheiten -(SiR²HO)- in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Die Organopolysiloxane (B) besitzen vorzugsweise einen Gehalt an Si-gebundenen Wasserstoffatomen von 0,1 bis 5 Gew.-%, insbesondere von 0,6 bis 1,6 Gew.-%.

Die Organopolysiloxane (B) besitzen vorzugsweise eine durchschnittliche Viskosität von 10 bis 1 000 mPa.s, insbesondere von 50 bis 200 mPa.s bei 25°C.

Organosiliciumverbindung (B) wird vorzugsweise in Mengen von 0,5 bis 3,5, bevorzugt 1,0 bis 3,0 Grammatom, Si-gebundenen Wasserstoff je Mol Kohlenwasserstoffrest mit terminaler aliphatischer Kohlenstoff-Kohlenstoff-Doppelbindung in dem Organopolysiloxan (A) eingesetzt.

Als die Anlagerung von Si-gebundenem Wasserstoff an aliphatische Doppelbindungen fördernde Katalysatoren (C) können bei den vernetzbaren Zusammensetzungen die gleichen Katalysatoren eingesetzt werden, die auch bisher zur Förderung der Anlagerung von Si-gebundenem Wasserstoff an aliphatische Doppelbindung eingesetzt werden konnten. Als Katalysatoren (C) werden vorzugsweise Metalle aus der Gruppe der Platinmetalle oder Verbindungen oder Komplexe aus der Gruppe der Platinmetalle eingesetzt. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetra-methyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Die Katalysatoren (C) werden vorzugsweise in Mengen von 10 bis 1000 Gew.-ppm (Gewichtsteilen je Million Gewichtsteilen), bevorzugt 20 bis 200 Gew.-ppm, insbesondere 50 bis 100 Gew.-ppmjeweils berechnet als elementares Platinmetall und bezogen auf das Gesamtgewicht der Organosiliciumverbindungen (A) und (B), eingesetzt.

Die vernetzbaren Zusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC≡C-C(CH₃)(OH)-CH₂-CH₂-CH=C(CH₃)_{2,} käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, Anti Misting Additiv, organische Lösungsmittel, Haftvermittler und Pigmente.

Beispiele für Mittel zur Einstellung der Trennkraft in den Zusammensetzungen sind Siliconharze, aufgebaut aus Einheiten der allgemeinen Formel (IV)

R³R⁴₂SiO_{1/2} (IV)

und SiO₂ sogenannte MQ-Harze, wobei
- **R³**: ein Wasserstoffatom oder einen einwertigen SiC-gebundenen, gegebenenfalls substituierten Kohlenwasserstoffrest mit 1 bis 18 Kohlenstoffatomen und
- **R⁴**: einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeuten,
und die Einheiten der allgemeinen Formel (IV) gleich oder verschieden sein können.
Das Verhältnis von Einheiten der allgemeinen Formel (IV) zu Einheiten der Formel SiO₂ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele und bevorzugte Beispiele für **R³** sind für **R¹** aufgeführte Kohlenwasserstoffreste. Beispiele und bevorzugte Beispiele für **R⁴** sind für **R** aufgeführte Kohlenwasserstoffreste.

Beispiele für Anti Misting Additive sind Si-gebundene Wasserstoffatome aufweisende Siloxancopolymere herstellbar, indem eine mindestens drei aliphatische Doppelbindungen aufweisende Verbindung (1) der allgemeinen Formel (V)

R⁵(CR⁶=CH₂)ₓ (V),

wobei
- **R⁵**: einen dreiwertigen oder vierwertigen Kohlenwasserstoffrest mit vorzugsweise 1 bis 25 Kohlenstoffatomen je Rest, der ein oder mehrere von einander separate Heteroatome ausgewählt aus der Gruppe von Sauerstoff, Silizium und Titan enthalten kann,
- **R⁶**: ein Wasserstoffatom oder einen Alkylrest mit 1 bis 6 Kohlenstoffatomen je Rest und
- **x**: Werte 3 oder 4, bedeuten,
mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10 beträgt,
und gegebenenfalls in einem zweiten Schritt
die so erhaltenen Si-gebundene Wasserstoffatome aufweisenden Siloxancopolymere mit Organopolysiloxan (4),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
eingesetzt werden.

Weitere Beispiele für Anti Misting Additive sind Alkenylgruppen aufweisende Siloxancopolymere enthaltend 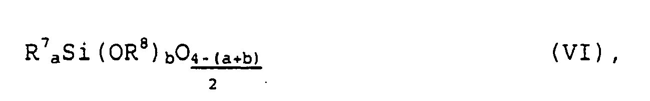
(a) Siloxaneinheiten der allgemeinen Formel (VI) wobei
   - **R⁷**: gegebenfalls halogenierte Kohlenwasserstoffreste mit 1 bis 18 Kohlenstoffatomen je Rest,
   - **R⁸**: Alkylreste mit 1 bis 4 Kohlenstoffatomen je Rest, die durch ein Ethersauerstoffatom substituiert sein können,
   - **a**: Werte 0, 1, 2 oder 3 und
   - **b**: Werte 0, 1, 2 oder 3 bedeuten
   und die Summe a+b nicht größer als 3 ist,
(b) je Molekül mindestens eine Siloxaneinheit der allgemeinen Formel (VII) 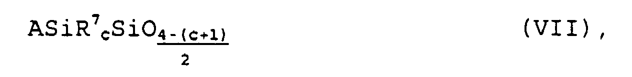 wobei
   - **R⁷**: die oben dafür angegebene Bedeutung hat,
   - **c**: Werte 0, 1 oder 2,
   - **A**: einen Rest der allgemeinen Formel (VIII),

   -CH₂CHR¹⁰-R⁹ (CR¹⁰=CH₂) _{y-1} (VIII),
   wobei
   - **R⁹**: einen zweiwertigen, dreiwertigen oder vierwertigen Kohlenwasserstoffrest mit 1 bis 25 Kohlenstoffatomen je Rest,
   - **R¹⁰**: ein Wasserstoffatom oder einen Alkylrest mit 1 bis 6 Kohlenstoffatomen je Rest und
   - **y**: Werte 2, 3 oder 4, bedeuten, und
(c) je Molekül durchschnittlich mindestens eine Einheit, ausgewählt wird aus der Gruppe von Einheiten der allgemeinen Formeln (IX) bis (XI) 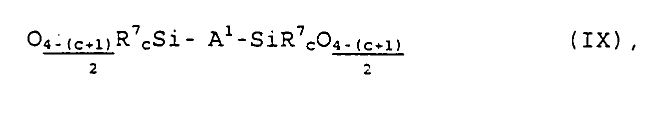 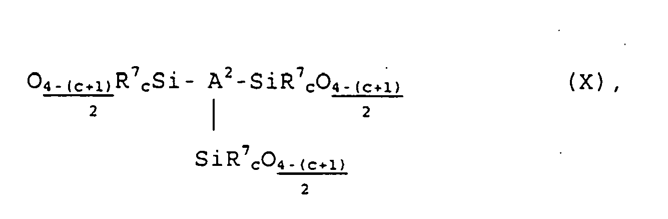 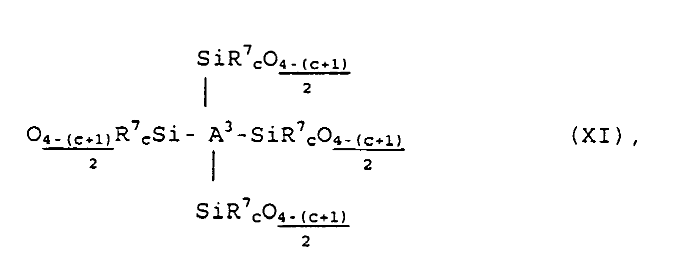
wobei **R⁷** und c die oben dafür angegebene Bedeutung haben,
**A¹** einen Rest der allgemeinen Formel (XII) 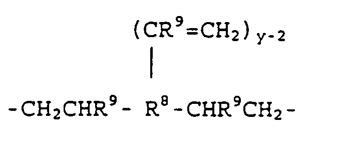 wobei **R⁸, R⁹** und **y** die oben dafür angegebene Bedeutung haben,
- **A²**: einen Rest der allgemeinen Formel (XIII) 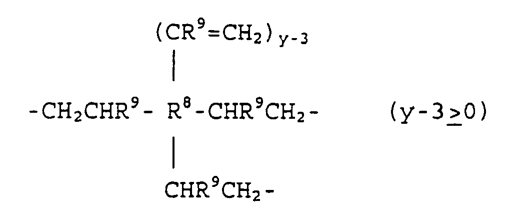 wobei **R⁸, R⁹** und y die oben dafür angegebene Bedeutung haben, mit der Maßgabe, dass **R⁸** kein zweiwertiger Kohlenwasserstoffrest ist, und
- **A³**: einen Rest der allgemeinen Formel (XIV) 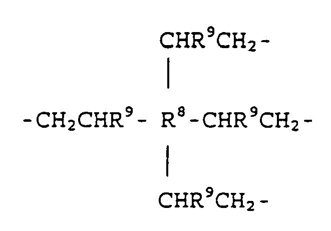 wobei **R⁸** und **R⁹** die oben dafür angegebene Bedeutung haben, mit der Maßgabe, dass **R⁸** kein zweiwertiger oder dreiwertiger Kohlenwasserstoffrest ist, bedeuten.

Beispiele für geeignete organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper herstellbar durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien, Polyesterfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschliesslich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemässen Zusammensetzungen ist die Ausrüstung von Trägern zum Übertragen von Haftklebeschichten beim sogenannten "TransferVerfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen.

Alle vorstehenden Symbole der vorstehenden Formeln weisen ihre Bedeutungen jeweils unabhängig voneinander auf.

In den folgenden Anwendungsbeispielen beziehen sich alle Angaben von Teilen und Prozentsätzen auf das Gewicht. Die Beispiele wurden bei einem Druck der umgebenden Atmosphäre, also etwa bei 1012 mbar, und bei Raumtemperatur, also etwa bei 21 °C, durchgeführt. Die Viskositäten wurden bei 25°C gemessen.

### Beispiele:

Das erfindungsgemäss eingesetzte Allylorganopolysiloxan Polymer A wurde in vernetzbaren Zusammensetzungen mit vinylseitenständigem Polymer B, hexenylseitenständigem Polymer C und vinylendständigem Polymer D verglichen.
Polymer A: Vi(CH₃)₂Si(OSi(CH₃)₂)₁₄₀(OSi(CH₃)A)₂OSi(CH₃)₂Vi
Polymer B: Vi(CH₃)₂Si(OSi(CH₃)₂)₁₄₀(OSi(CH₃)Vi)₂OSi(CH₃)₂Vi
Polymer C: Vi(CH₃)₂Si(OSi(CH₃)₂)₁₄₀(OSi(CH₃)Hex)₂0Si(CH₃)₂Vi
Polymer D: Vi(CH₃)₂Si(OSi(CH₃)₂)₁₄₀OSi(CH₃)₂Vi

Hex bedeutet Hexenylrest und **Vi** und **A** weisen die vorstehenden Bedeutungen auf.

Als Standardformulierung wurde eine Mischung aus je
100 Gew.-teile der Polymere A bis D,
8 Gew.-teile eines linearen Polysiloxans aus Hydrogenmethylsiloxan- und Dimethylsiloxaneinheiten im Molverhältnis 3 : 1 mit Trimethylsiloxanendeinheiten und einer Viskosität von 34 mPa·s (25°C),
1,1 Gew.-teile einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C und
0,3 Gew.-teile 1-Ethinylcyclohexanol
eingesetzt.

Diese Mischungen wurden zur Papierbeschichtung eingesetzt.

Als Substrat wurde Papier der Fa. Ahlstrom mit der Bezeichnung Glassine Silca Classic verwendet. Die Beschichtung erfolgte auf einer Beschichtungsanlage der Fa. Dixon der Modellnummer 1060 mit mit einem 5 Walzen-Auftragswerk, bei 90 m/min. Die Beschichtung wurde im Trocknungsofen mit 3 m Länge bei 140°C ausgehärtet. Dies entspricht einer Vernetzungszeit von 2 Sekunden.

Das Beschichtungsgewicht wurde mittels Röntgenfluoreszenzanalyse in Referenz zu einem geeigneten Standard bestimmt.

Die Aushärtung des Beschichtungssystems wurde mittels Extraktion unvernetzter Anteile in MIBK (=Methylisobutylketon) und Ermittlung des extrahierten Siliciumgehalts durch Atomabsorptionsspektrometrie bestimmt.

Die beschichteten Papiere wurden in einem Versuch mit einem in der Etikettenindustrie gängigen, schmelzkleberbasierenden Etikettenmaterial laminiert. Die Laminate wurden vor der Trennwertbestimmung bei 25°C 4 Tage nach FINAT Testmethode FTM 10 bei einem Druck von 70 g/cm² gelagert.
Die beschichteten Papiere wurden in einem weiteren Versuch mit einem in der Etikettenindustrie gängigen, wäßrigen acrylatkleberbasierenden Etikettenmaterial laminiert. Die Laminate wurden vor der Trennwertbestimmung bei 50°C 20 Stunden nach FINAT Testmethode FTM 3 bei einem Druck von 70 g/cm² gelagert.

Die Trennwerte der so hergestellten Laminate wurden nach FINAT Testmethode FTM 10 bei Abzugsgeschwindigkeiten von 0,3 m/min., 10 m/min. und 300 m/min bestimmt.

Die Testmethoden sind in der Broschüre DEHESIVE^{®} Silicones Testmethoden der Fa. Wacker-Chemie GmbH und im FINAT Technischen Handbuch (Testmethoden) 6. Ausgabe beschrieben.

Die Ergebnisse sind in der Tabelle 1 zusammenfasst.

**Tabelle 1:**

| Polymer | Extrakt % | Trennwerte Schmelzkleberlaminat | | | Trennwerte Acrylatkleberlaminat | | |
|---|---|---|---|---|---|---|---|
| | | 0,3 m/min. | 10 m/min. | 300 m/min. | 0,3 m/min. | 10 m/min | 300 m/min. |
| A | 2,6 | 6,8 | 4,0 | 10,4 | 7,1 | 4,3 | 12,7 |
| B | 12,3 | 3,8 | 3,3 | 12,0 | 4,9 | 4,0 | 17,5 |
| C | 2,8 | 4,6 | 4,9 | 12,3 | 5,8 | 5,5 | 13,0 |
| D | 10,6 | 2,6 | 3,8 | 18,5 | 2,4 | 4,0 | 24,4 |

Die Ergebnisse zeigen sehr niedrige Extraktwerte der erfindungsgemäßen vernetzbaren Siliconzusammensetzung auf Basis von Polymer A, was einer sehr schnellen Aushärtungsgeschwindigkeit entspricht.
Die Trennwerte bei 300 m/min. sind niedrig im Vergleich zu den Vergleichspolymeren. Dies ist vorteilhaft für die weitere Verarbeitung des Etikettenlaminats.

## Patentansprüche

1. Vernetzbare Zusammensetzungen enthaltend
(A) Alkenylgruppen aufweisende Organopolysiloxane der allgemeinen Formel (I) 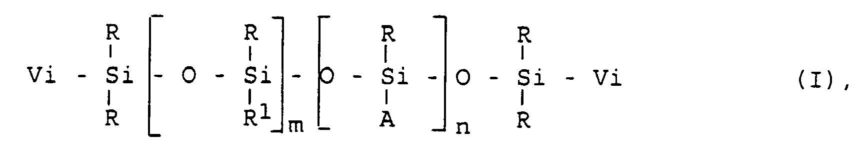 in der
R einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
**R¹** einen einwertigen SiC-gebundenen, gegebenenfalls substituierten Kohlenwasserstoffrest mit 1 bis 18 Kohlenstoffatomen,
A einen Allylrest,
Vi einen Vinylrest,
m einen Wert von 40 bis 1000 und
n einen Wert von 1 bis 10 bedeuten,
(B) Organosiliciumverbindungen mit Si-gebundenen Wasserstoffatomen und
(C) die Anlagerung von Si-gebundenem Wasserstoff an aliphatische Doppelbindungen fördernde Katalysatoren.

2. Vernetzbare Zusammensetzungen nach Anspruch 1, bei denen der Rest R ein Methylrest ist.

3. Vernetzbare Zusammensetzungen nach Anspruch 1 oder 2, bei denen als Organosiliciumverbindungen (B) lineare, cyclische oder verzweigte Organopolysiloxane aus Einheiten der allgemeinen Formel (II)
R²ₐH_{b}SiO_{(4-a-b)/2} (II),
eingesetzt werden, wobei
R² einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen,
a die Werte 0, 1, 2 oder 3 und
b die Werte 0, 1 oder 2 bedeuten,
und die Summe von a+b 0, 1, 2 oder 3 ist,
mit der Maßgabe, dass pro Molekül durchschnittlich mindestens 2 Si-gebundene Wasserstoffatome vorliegen.

4. Vernetzbare Zusammensetzungen nach Anspruch 1 bis 3, bei den als Katalysatoren (C) Metalle aus der Gruppe der Platinmetalle oder Verbindungen oder Komplexe aus der Gruppe der Platinmetalle eingesetzt werden.

5. Formkörper herstellbar durch Vernetzung der Zusammensetzungen gemäß einem der Ansprüche 1 bis 4.

6. Formkörper nach Anspruch 5, bei denen es sich um Beschichtungen handelt.

7. Formkörper nach Anspruch 5 oder 6, bei denen es sich um klebrige Stoffe abweisende Überzüge handelt.

8. Verfahren zur Herstellung von Beschichtungen durch Auftragen von vernetzbaren Zusammensetzungen gemäß einem der Ansprüche 1 bis 4 auf die zu beschichtenden Oberflächen und anschließende Vernetzung der Zusammensetzungen.

## Claims

1. Crosslinkable compositions comprising
(A) organopolysiloxanes containing alkenyl groups, of the general formula (I) 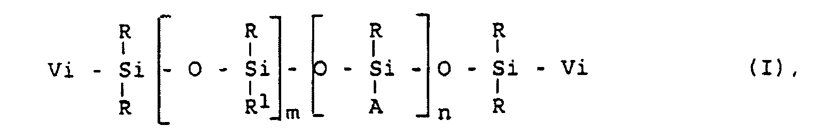 in which
R is a monovalent, SiC-bonded, unsubstituted or substituted hydrocarbon radical which has
1 to 18 carbon atoms and is free from aliphatic carbon-carbon double bonds and
R¹ is a monovalent, SiC-bonded, unsubstituted or substituted hydrocarbon radical having 1 to 18 carbon atoms,
A is an allyl radical,
Vi is a vinyl radical,
m is a value from 40 to 1000 and
n is a value from 1 to 10,
(B) organosilicon compounds having Si-bonded hydrogen atoms, and
(C) catalysts which promote the addition of Si-bonded hydrogen to aliphatic double bonds.

2. Crosslinkable compositions according to Claim 1, in which the radical R is a methyl radical.

3. Crosslinkable compositions according to Claim 1 or 2, wherein organosilicon compounds (B) used are linear, cyclic or branched organopolysiloxanes comprising units of the general formula (II)
R²ₐH_{b}SiO_{(4-a-b)/2} (II),
where
R² is a monovalent, SiC-bonded, unsubstituted or substituted hydrocarbon radical which has 1 to 18 carbon atoms and is free from aliphatic carbon-carbon double bonds,
a is the values 0, 1, 2 or 3 and
b is the values 0, 1 or 2,
and the sum of a+b is 0, 1, 2 or 3,
with the proviso that there are on average at least 2 Si-bonded hydrogen atoms per molecule.

4. Crosslinkable compositions according to Claim 1 to 3, wherein catalysts (C) used are metals from the group of the platinum metals or compounds or complexes from the group of the platinum metals.

5. Shaped bodies producible by crosslinking the composition according to any one of Claims 1 to 4.

6. Shaped bodies according to Claim 5, being coatings.

7. Shaped bodies according to Claim 5 or 6, being coatings which repel tacky substances.

8. Process for producing coatings by applying crosslinkable compositions according to any one of Claims 1 to 4 to the surfaces to be coated and then crosslinking the compositions.

## Revendications

1. Compositions réticulables, contenant
(A) des organopolysiloxanes présentant des groupes alcényle de formule générale (I) 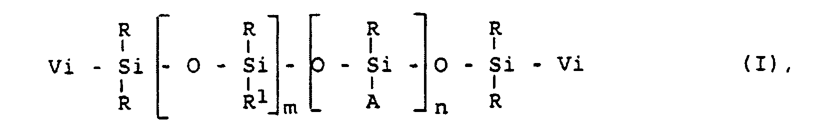 dans laquelle
R signifie un radical hydrocarboné monovalent, exempt de doubles liaisons carbone-carbone aliphatiques, lié par SiC, le cas échéant substitué, comprenant 1 à 18 atomes de carbone,
R¹ signifie un radical hydrocarboné monovalent, le cas échéant substitué et comprenant 1 à 18 atomes de carbone,
A signifie un radical allyle,
Vi signifie un radical vinyle,
m signifie une valeur de 40 à 1000 et
n signifie une valeur de 1 à 10,
(B) des composés organosiliciés avec des atomes d'hydrogène liés par Si et
(C) des catalyseurs favorisant l'addition d'hydrogène lié par Si sur des doubles liaisons aliphatiques.

2. Compositions réticulables selon la revendication 1, dans lesquelles le radical R est un radical méthyle.

3. Compositions réticulables selon la revendication 1 ou 2, dans lesquelles on utilise, en tant que composés organosiliciés (B), des organopolysiloxanes linéaires, cycliques ou ramifiés à base de motifs de formule générale (II)
R²ₐH_{b}SiO_{(4-a-b)}/2 (II),
dans laquelle
R² signifie un radical hydrocarboné monovalent, exempt de doubles liaisons carbone-carbone aliphatiques, lié par SiC le cas échéant substitué, comprenant de 1 à 18 atomes de carbone,
a vaut 0, 1, 2 ou 3 et
b vaut 0, 1 ou 2,
et la somme de a+b vaut 0, 1, 2 ou 3,
à condition qu'en moyenne au moins 2 atomes d'hydrogène liés par Si soient présents par molécule.

4. Compositions réticulables selon les revendications 1 à 3, dans lesquelles on utilise, en tant que catalyseurs (C), des métaux parmi le groupe des métaux du platine ou des composés ou des complexes du groupe des métaux du platine.

5. Corps façonné pouvant être préparés par réticulation des compositions selon l'une quelconque des revendications 1 à 4.

6. Corps façonné selon la revendication 5, où il s'agit de revêtements.

7. Corps façonné selon la revendication 5 ou 6, où il s'agit de recouvrements repoussant les substances collantes.

8. Procédé pour la réalisation de revêtements par application de compositions réticulables selon l'une quelconque des revendications 1 à 4 sur les surfaces à revêtir et réticulation consécutive des compositions.
